# EUROPEAN PATENT SPECIFICATION

(11) **EP 1 720 645 B1**
(45) Date of publication and mention of the grant of the patent: **22.01.2020**
(21) Application number: 05708381.8
(22) Date of filing: 17.02.2005
(51) Int. Cl.: B01J 8/22

(54) **DOWNCOMERS FOR SLURRY BUBBLE COLUMN REACTORS**
ABLAUFVORRICHTUNGEN FÜR SUSPENSIONSBLASENREAKTOREN
TUBE DE DESCENTE POUR REACTEUR A BOUILLIE BOUILLONNANTE

(30) Priority: 24.02.2004 GB 0404070
(43) Date of publication of application: 15.11.2006
(73) Proprietor: Statoil ASA, 4035 Stavanger (NO); PetroSA, Parow 7500 (ZA)
(72) Inventor: MYRSTAD, Trond, 7560 Vikhammer (NO); SORAKER, Pal, 7049 Trondheim (NO); JULIUSSEN, Olav, 7049 Trondheim (NO); WIIG, Per, Oscar, 7040 Trondheim (NO)
(74) Representative: Copsey, Timothy Graham
(86) International application number: PCT/GB2005/000579
(87) International publication number: WO 2005/082512

(56) References cited:
- WO-A-98/50494
- US-A- 3 957 626
- US-B1- 6 270 734

## Description

The present invention relates to slurry bubble column reactors including downcomers.

Downcomers are used in slurry bubble columns reactors (SBCRs) in order to achieve a more suitable and uniform distribution of catalyst particles in the vertical direction of the slurry phase, and a more uniform temperature within the SBCR. In general, downcomers are tubular structures positioned vertically in the SBCRs, and are provided with gas disengaging means and means for restricting the entry of rising gas bubbles into the lower end of the downcomer structures.

WO 98/50494 shows a downcomer which is provided with a gas disengaging zone positioned in the upper part of the downcomer. A cone shaped baffle below the bottom of the downcomer prevents upwardly moving gas bubbles from entering into the downcomer.

In EP 0674610, a downcomer is shown which is open at both ends and fully submerged in the slurry phase. The bottom end of the downcomer is shielded by a baffle arrangement which diverts gas bubbles from the bottom of the SBCR away from entering into the bottom end of the downcomer. The baffle arrangement may have the shape of a cone similar to that of WO 98/50494.

US6270734 discloses a downcomer for producing at least two slurries having different solids and gas concentrations from a single three phase slurry of particulate solids and gas bubbles in a slurry liquid has two or more concentric gas and solids disengaging zones, each having an open fluid conduit depending from an orifice in the bottom. The downcomer is useful in a slurry hydrocarbon synthesis process for forming a catalyst and gas reduced slurry which is passed to a liquid filter to remove hydrocarbon liquid from the slurry reactor.

US3957626 discloses a method for catalytic hydrodesulfurization of a heavy petroleum hydrocarbon oil in a reactor composed of a cylindrical pressure vessel and a cylindrical inner pipe, in which hydrogen gas, oil liquid and solid catalyst particles are concurrently present and the catalyst particles are fluidized and recycled in the reactor without flowing out of the reactor. An improvement for the prevention of the catalyst's efflux is achieved by the provision of a bubble-collecting plate and at least two catalyst particle catching plates above the inner pipe in the reactor.

It is an object of the invention to achieve a more uniform vertical distribution of catalyst particles in a SBCR.

According to the invention, there is provided a slurry bubble column reactor arranged in use to include a slurry phase and, above the slurry phase, a gas phase, the reactor including a downcomer secured within it, the downcomer comprising an elongate tube, the tube having a lower portion and an upper portion, the lower portion having a slurry outlet in the region of the bottom of the tube, the upper portion having a slurry inlet arranged to allow slurry to enter the tube, gas separation means arranged to separate gas bubbles from slurry within the upper portion of the tube, and a gas outlet in the region of the top of the tube, the slurry inlet comprising one or more slots in the wall of the upper portion of the tube, in which the uppermost part of the upper portion extends above the surface of the slurry phase in use and is open for fluid communication with the gas phase above the slurry phase, thereby providing the gas outlet, and in which the slots in the upper portion of the tube are elongate in the direction of the axis of the downcomer with the height of the slots being greater than their width, and in which the slots are at a position below the surface of the slurry in use.

Preferably, the gas separation means comprises a separation zone which has a larger cross-sectional area than the lower portion of the tube. Preferably, the cross-sectional area of the separation zone is at least a factor of 2 greater than that of the lower portion of the tube. Preferably, the area of the slurry inlet to the downcomer is at least equal to the cross-sectional area of the upper portion of the tube.

The slots may be for example rectangular or triangular in shape. The slots may also be arranged in a plurality of circumferential rows one above the other, each row extending around the periphery of the downcomer. Preferably, the slots are 0.5 to 20 cm in width at their widest and 2 to 50 cm in height, more preferably, 1 to 10 cm in width and 10 to 40 cm in height. Preferably, the dimensions of the slots are arranged so that, in use, at least 80% of the gas bubbles under the prevailing reactor conditions pass through the slots as spherical gas bubbles (that is as if the irregular bodies of the gas bubbles were to have the shape of spherical gas bubbles).

Preferably, the vertical length of the downcomer is in the range of 30-120% of the intended depth of the slurry in the reactor when in use. Preferably the reactor contains a plurality of downcomers as described.

Gas bubbles, which are separated from the slurry phase by the gas separation means in the upper part of the conduit, are preferably collected and allowed to escape into the gas phase above the slurry phase. The shape and size of the slots may influence the way in which the slurry enters the downcomer and the subsequent motion of the slurry and this may have an effect on the separation of entrained gas bubbles.

In comparison to downcomer designs in which the downcomer is fully submerged in the slurry and where the slurry (and gas bubbles) enters the downcomer conduit from above, a slurry inlet in the form of slots in the vertical wall of the conduit in accordance with the invention appears to assist in the influx of slurry phase into the downcomer conduit and the separation of gas bubbles. This is observed both in separating gas bubbles from the incoming flow of slurry phase before the slurry enters conduit through the slots in the wall of the conduit, and also inside the conduit, probably due to a more favourable flow pattern in and around the individual slots.

Preferably, any substantial part of the walls of the downcomer has an inclination that is steeper than the angle of repose of the catalyst particles under the prevailing conditions thereby preventing deposition/settling of catalyst at such locations, for example on the surface of the downcomer.

The invention extends to the use of such a reactor to carry out a Fischer-Tropsch synthesis reaction, and to a method of carrying a Fischer-Tropsch synthesis reaction which comprises supplying hydrogen gas and carbon monoxide gas to a slurry including a Fischer-Tropsh catalyst in a reactor, as described.

The invention may be carried into practice in various ways and some embodiments will now be described by way of example with reference to the accompanying drawings, in which:

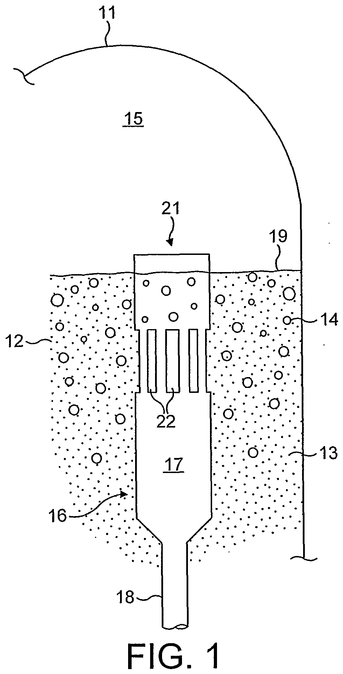

Figure 1 is a partial schematic, vertical cross-section through a reactor according to the invention.

The embodiment shown in Figure 1 represents one particular experimental set up which illustrates the principles and operation of the invention. It is to be understood that this embodiment may not correspond to a full scale industrial application.

The reactor 11 includes a slurry 12 including finely divided catalyst particles (indicated schematically by reference numeral 13), and upwardly moving gas bubbles 14, and above the slurry 12, a gas zone 15. Several downcomers 16, one of which is shown in Figure 1, are located within the reactor 11.

The downcomer 16 comprises an elongate tube including an upper portion 17 and a lower portion 18. The upper portion 17 extends above the level 19 of the slurry 12 and is open at the top, thus providing a gas outlet 21. Beneath the slurry level 19, the upper portion includes a plurality of vertical slots 22 which constitute slurry inlets.

The upper portion 17 is wider in diameter than the lower portion 18 and so constitutes a gas separation zone in which gas bubbles entrained in the slurry 12 entering downcomer 16 via the slots 22 are separated and allowed to move upwards to the gas zone 15 via the gas outlet 21.

The lower portion 18 has a narrower diameter than the upper portion 17 and extends downwards towards the bottom of the reactor 11. The lower portion 18 has a slurry outlet (not shown) at or near its lower end.

In the illustrated embodiment, the upper portion 17 has a height of about 260cm and an internal diameter of about 21cm. The lower portion 18 has a height of about 1300cm and an internal diameter of about 11cm. The reactor 11 itself has a height of about 1600 cm and an internal diameter of 50 cm, and contains slurry 16 to a height of about 1550 cm. This is below the level of the open top 21 of the downcomer 16, and defines the gas zone 15. There is a gas outlet (not shown) at the top of the reactor 11.

Near the bottom of the reactor 11 (not shown), there is a gas inlet, a gas distributor and a slurry outlet.

The invention, will now be further illustrated in the following Examples. The apparatus used was that described with reference to Figure 1. It is to be understood that in a commercial installation, a downcomer could have other dimensions than the downcomers referred to in the following Examples.

### Example 1

### Reference experiment without solids

In this example, the slurry inlet in the downcomer consisted of triangular openings in the gas separation (de-gassing) section. Each triangular opening had a width of 82mm, and a height of 78mm, i.e. an inlet area of 3198mm². The triangular openings were arranged in three rows, each row with 7 openings, which gave a total inlet area of 0.067m². All the openings had an apex uppermost. The distance between the top of the triangular openings in the upper row and the bottom of the triangular openings in the lower row, was 220mm.

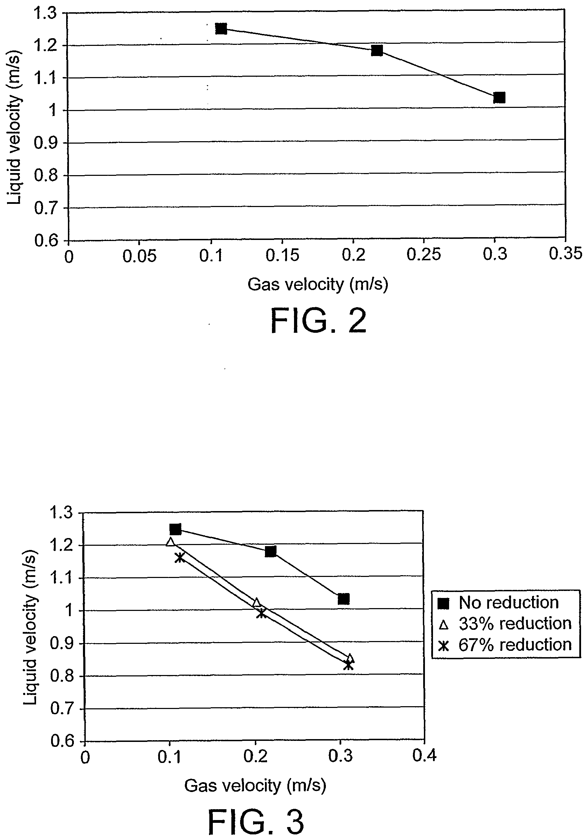

A column containing the downcomer was filled with water, air was injected near the bottom of the reactor, and the superficial gas velocity, u_{g}, was varied. The expanded liquid level above the top of the slurry inlet area, Δhₜₒₚ, was kept approximately constant. In the Table 1 below, the corresponding liquid velocities, uₗ, in the lower portion of the downcomer are reported. The results are also shown in Figure 2.

**Table 1**

| U_{g} (m/s) | Δhₜₒₚ (m) | uₗ (m/s) |
|---|---|---|
| 0.107 | 1.25 | 1.25 |
| 0.217 | 1.25 | 1.18 |
| 0.302 | 1.25 | 1.03 |

The results show that the efficiency of the downcomer decreases with increasing gas velocity. It should however be borne in mind that the main function of a downcomer is to decrease the axial catalyst concentration profile and that this profile decreases with increasing gas velocities. It is therefore most important that the downcomer has a good efficiency at low gas velocities.

### Example 2

### Reference Example:

### Effect of slurry inlet area

In the same column as in Example 1, the slurry inlet area of the downcomer was reduced by 33% , by blocking all the triangular openings in the middle row, and downcomer liquid velocities were measured at varying gas velocities. Thereafter the slurry inlet area was further reduced, to 33% of the original area, by blocking half of the triangular openings in the upper row and half of the triangular openings in the bottom row, and liquid velocities were measured. The results are shown in Table 2 in Figure 3.

**Table 2**

| U_{g (m/s)} | Δhₜₒₚ (m) | uₗ (m/s) | area reduction (%) |
|---|---|---|---|
| 0.103 | 1.25 | 1.21 | 33 |
| 0.202 | 1.2 | 1.02 | 33 |
| 0.311 | 1.2 | 0.85 | 33 |
| 0.113 | 1.2 | 1.16 | 67 |
| 0.207 | 1.2 | 0.99 | 67 |
| 0.309 | 1.2 | 0.83 | 67 |

The results show the importance of having a sufficient slurry inlet area.

### Example 3

### Reference experiments with solids

The column with the downcomer now was filled with particles. The particles used were of SiC, and had an average particle size of approximately 75 µm. The concentration of particles was approximately 200 g/l. The expanded liquid level above the top of the slurry inlet area, Δhₜₒₚ, was kept approximately constant.

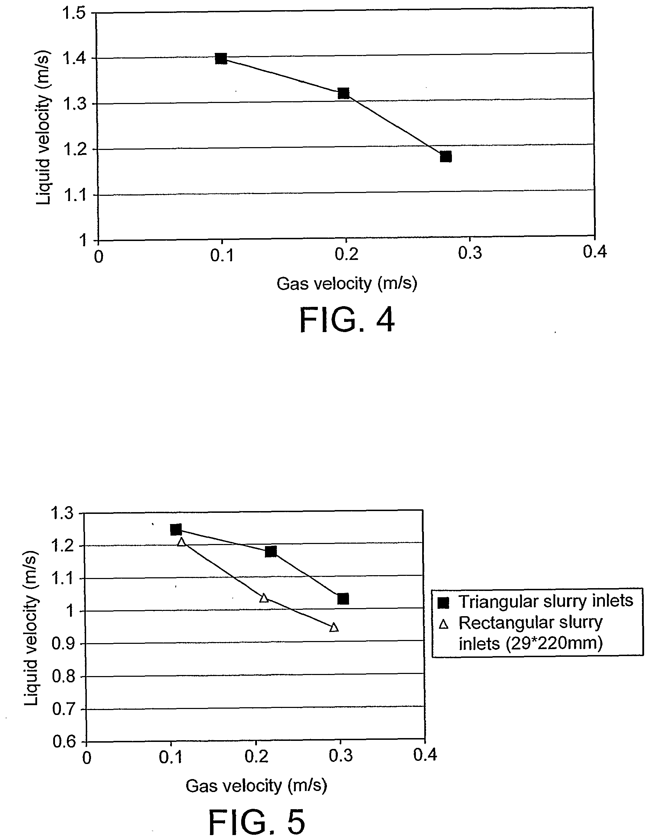

In Table 3 below, the corresponding liquid velocities, uₗ, in the downcomer are reported. The results shown in the table are also shown in Figure 4.

**Table 3**

| Δhₜₒₚ (m) | u_{g (m/s)} | uₗ (m/s) |
|---|---|---|
| 1.1 | 0.101 | 1.4 |
| 1.2 | 0.199 | 1.32 |
| 1.1 | 0.281 | 1.18 |

### Example 4

### Effect of slurry inlet geometry

In all the previous examples, the slurry inlet geometry has been kept constant. In the following experiment, a slurry inlet was constituted by rectangular openings with a height of 220 mm and a width of 29 mm. The height of the rectangular openings was identical to the distance between the top of the triangular openings in the upper row, and the bottom of the triangular openings in the lower row, in the experiments with triangular slurry inlets. The number of openings was 10, in order to achieve approximately the same total area as with the previously described triangular openings. Otherwise the same experimental set-up as described in Example 1 was used.

In Table 4 below, the results are shown. In Figure 5, the results with the rectangular slurry inlet arrangement are compared with the results with the triangular slurry inlet arrangement (i.e. experiments reported in Example 1).

**Table 4**

| Δhₜₒₚ (m) | U_{g (m/s)} | uₗ (m/s) |
|---|---|---|
| 1.25 | 0.114 | 1.21 |
| 1.25 | 0.209 | 1.04 |
| 1.6 | 0.292 | 0.948 |

As can be seen from Figure 5, the downcomer efficiency with the rectangular slurry inlet was lower than with triangular slurry inlet, even though the slurry inlet areas were the same.

### Example 5

### Effect of the size of the inlet area

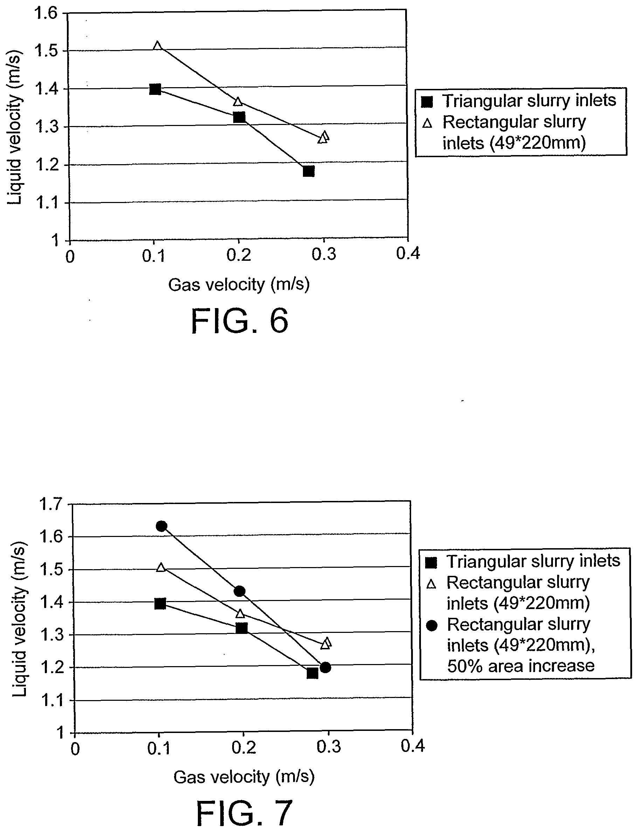

In the following example, a slurry inlet consisting of rectangular openings with a larger width was used. The width of the rectangular openings was increased from 29 to 49 mm, while the height was kept constant (220 mm). The number of openings was reduced from 10 to 6 to keep the total slurry inlet area constant. In the Table 5 below, the results are shown. In Figure 6, the results of the experiments with the rectangular slurry inlet with larger widths are compared with the results from the experiments with the triangular slurry inlets (i.e. experiments reported in Example 3).

**Table 5.**

| Δh_{tορ} (m) | U_{g (m/s)} | uₗ (m/s) |
|---|---|---|
| 1 | 0.105 | 1.51 |
| 0.9 | 0.199 | 1.36 |
| 0.8 | 0.297 | 1.26 |
| 0.9 | 0.3 | 1.27 |

As can be seen from Figure 6, the downcomer efficiency in the case of the rectangular slurry inlets is no longer lower than with the triangular slurry inlets; in fact it is higher.

The observed behaviour is probably caused by differences in the size of the slurry inlet openings. Assuming spherical gas bubbles, triangular openings with a geometry as used in the Examples will let gas bubbles with diameters less than approximately 50 mm pass unhindered.

With rectangular openings having dimensions of 29 mm x 220 mm, only gas bubbles with diameters less than 29 mm will pass unhindered, while with rectangular openings with dimensions 49 mm x 220 mm, gas bubbles with diameters less than about 50 mm can pass almost unhindered. Without being bound to any specific theory, it is believed that larger bubbles, which can not pass, for short periods can block the slurry inlets, thereby decreasing the flux through the slurry inlet, and causing lower liquid velocities in the downcomer.

In this context it can be observed that WO 98/50494 shows a plurality of baffles, which are described as a gas disengaging zone, in which at least a portion of the gas bubbles and slurry particles are prevented from entering into the downcomer, i.e. the opposite of what is recommended, based on the results observed in the above Example.

The different behaviour for the triangular and the rectangular slurry inlets, where gas bubbles of the same size theoretically can pass unhindered, can, again without being bound to any specific theory, be explained by the flow behaviour in the slurry bubble column reactor. With turbulent flow, each gas bubble has a horizontal and a vertical dynamic velocity component, u_{g,h} and u_{g,v}, respectively.

With triangular slurry inlets, gas bubbles with a diameter close to 50 mm can only pass unhindered if their vertical velocity component is close to zero. With rectangular inlets, gas bubbles with diameters up to 50 mm can pass unhindered more or less independently of their vertical velocity component.

### Example 6

### Effect of slurry inlet area with rectangular slurry inlets

In Example 2 it was shown that downcomer efficiency was reduced when the slurry inlet area was reduced. For practical reasons, the slurry inlet area could not be increased with the design described in Example 2. However, there was reason to believe that the efficiency could be increased if the inlet area was increased. With the slurry inlet design described in Example 5, it was possible to increase the slurry inlet area by 50%, by increasing the number of rectangular openings from 6 to 9. In Table 6 below, the results from these experiments are shown. In Figure 7, the results from experiments with the rectangular slurry inlet are compared with the results from Example 5.

**Table 6**

| Δhₜₒₚ (m) | U_{g (m/s)} | uₗ (m/s) |
|---|---|---|
| 1.3 | 0.107 | 1.63 |
| 1.3 | 0.199 | 1.43 |
| 1.3 | 0.297 | 1.19 |

As can be seen from Figure 7, by increasing the total slurry inlet area, the liquid velocity in the downcomer was increased.

### Example 7

### Reference Example:

### Effect of vortex break-up device

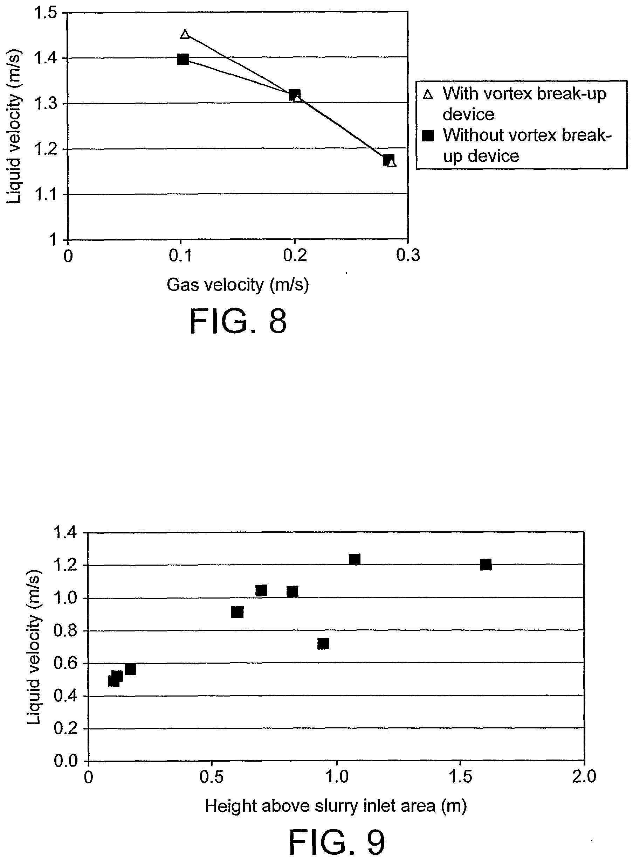

At high liquid velocities in the downcomer, a vortex is formed and observed in the lower section of the degassing section of the downcomer. This vortex increases the amount of gas in the downcomer tube, thereby decreasing the downcomer efficiency. If the formation of this vortex is hindered, the liquid velocity in the downcomer should increase. To verify this, a vortex break-up device was placed in the conical section between the degassing section and the lower portion of the downcomer tube. Otherwise the same experimental set-up as described in Example 3 was used. In Table 7 below, the results are shown. In Figure 8, the results of the experiments with the vortex break-up device are compared with results without this device in use (i.e. experiments reported in Example 3).

**Table 7**

| Δhₜₒₚ (m) | u_{g (m/s)} | uₗ (m/s) |
|---|---|---|
| 1 | 0.104 | 1.45 |
| 1.1 | 0.203 | 1.31 |
| 1.1 | 0.285 | 1.17 |

As can be seen from Figure 8, at the lowest gas velocity, with the highest liquid velocity in the downcomer, but only at this low gas velocity, a clear effect of the vortex break-up device can be seen.

### Example 9

### Effect of the expanded liquid level above the top of the slurry inlet area

A shorter version of the column previously described (6.6 m height), and with a 12.7 cm (5 inch) diameter downcomer generally similar to the downcomer shown in Figure 1 was filled with water. Air was injected near the bottom of the column, and the superficial gas velocity, u_{g}, and the expanded liquid level above the top of the slurry inlet area, Δhₜₒₚ, were varied. The results are shown in Table 8 below and in Figure 9.

**Table 8**

| Δhₜₒₚ (m) | U_{g (m/s)} | uₗ (m/s) |
|---|---|---|
| 0.1 | 0.122 | 0.5 |
| 0.11 | 0.318 | 0.53 |
| 0.17 | 0.246 | 0.57 |
| 0.6 | 0.202 | 0.92 |
| 0.69 | 0.106 | 1.05 |
| 0.82 | 0.208 | 1.04 |
| 0.94 | 0.303 | 0.72 |
| 1.07 | 0.248 | 1.24 |
| 1.6 | 0.316 | 1.21 |

These results show that the liquid velocity in the downcomer is dependent on the liquid level above the slurry inlet. A certain liquid level is necessary to obtain sufficient liquid velocity in the downcomer. (Since the liquid velocity varies with the liquid level above the slurry inlet, this has been kept approximately constant, and also has been reported in all previous Tables.

## Claims

1. A slurry bubble column reactor (11) arranged in use to include a slurry phase (12) and, above the slurry phase (12), a gas phase (15), the reactor (11) including a downcomer (16) secured within it, the downcomer (16) comprising an elongate tube, the tube having a lower portion (18) and an upper portion (17), the lower portion (18) having a slurry outlet in the region of the bottom of the tube, the upper portion (17) having a slurry inlet arranged to allow slurry to enter the tube, gas separation means arranged to separate gas bubbles from slurry within the upper portion of the tube and a gas outlet (21) in the region of the top of the tube, the slurry inlet comprising one or more slots (22) in the wall of the upper portion of the tube; in which the uppermost part of the upper portion (17) of the tube extends above the surface of the slurry phase (12) in use and is open for fluid communication with the gas phase (15) above the slurry phase (12), thereby providing the gas outlet (21), and in which the slots (22) in the upper portion of the tube are elongate in the direction of the axis of the downcomer with the height of the slots (22) being greater than their width, and in which the slots are at a position below the surface of the slurry (12) in use.

2. A reactor as claimed in Claim 1, in which the gas separation means comprises a separation zone which has a larger cross-sectional area than the lower portion (18) of the tube.

3. A reactor as claimed in Claim 2, in which the cross-sectional area of the separation zone is at least a factor of 2 greater than that of the lower portion (18) of the tube.

4. A reactor as claimed in any preceding claim, in which the area of the slurry inlet to the downcomer (16) is at least equal to the cross-sectional area of the upper portion (17) of the tube.

5. A reactor as claimed in any of Claims 1 to 4, in which the slurry inlet to the downcomer (16) comprises a plurality of rectangular slots (22).

6. A reactor as claimed in any of Claims 1 to 4, in which the slurry inlet to the downcomer (16) comprises a plurality of triangular slots.

7. A reactor as claimed in any preceding Claim, in which the slots (22) in the downcomer (16) are arranged in a plurality of circumferential rows one above the other, each row extending around the periphery of the downcomer (16).

8. A reactor as claimed in any preceding Claim, in which the slots (22) are 0.5 to 20 cm in width at their widest and 2 to 50 cm in height.

9. A reactor as claimed in any preceding Claim, in which the vertical length of the downcomer is in the range of 30 - 120% of the intended depth of the slurry (12) in the reactor when in use.

10. A reactor as claimed in any preceding Claim, including a plurality of downcomers (16).

11. The use of a slurry bubble column reactor (11) as claimed in any preceding Claims, to carry out a Fischer-Tropsch synthesis reaction.

12. A method of carrying out a Fischer-Tropsch synthesis reaction which comprises supplying hydrogen gas and carbon monoxide gas to a slurry including a Fischer-Tropsch catalyst in a reactor (11) as claimed in any of Claims 1 to 10.

## Patentansprüche

1. Suspensionsblasensäulenreaktor (11), der im Gebrauch so angeordnet ist, dass er eine Suspensionsphase (12) und über der Suspensionsphase (12) eine Gasphase (15) beinhaltet, wobei der Reaktor (11) einen innerhalb desselben gesicherten Rücklauf (16) beinhaltet, wobei der Rücklauf (16) ein längliches Rohr umfasst, wobei das Rohr einen unteren Abschnitt (18) und einen oberen Abschnitt (17) aufweist, wobei der untere Abschnitt (18) einen Suspensionsauslass im Bereich des Bodens des Rohrs aufweist, wobei der obere Abschnitt (17) einen Suspensionseinlass, der dazu angeordnet ist, zu ermöglichen, dass Suspension in das Rohr eintritt, eine Gasabscheideeinrichtung, die dazu angeordnet ist, innerhalb des oberen Abschnitts des Rohrs Gasblasen von Suspension zu trennen, und einen Gasauslass (21) im Bereich der Oberseite des Rohrs aufweist, wobei der Suspensionseinlass einen oder mehrere Schlitze (22) in der Wand des oberen Abschnitts des Rohrs umfasst; wobei sich der oberste Teil des oberen Abschnitts (17) des Rohrs im Gebrauch über die Oberfläche der Suspensionsphase (12) erstreckt und zur Fluidverbindung mit der Gasphase (15) über der Suspensionsphase (12) offen ist und dadurch den Gasauslass (21) bereitstellt und wobei die Schlitze (22) im oberen Abschnitt des Rohrs in der Richtung der Rücklaufachse gestreckt sind, wobei die Höhe der Schlitze (22) größer als ihre Breite ist und wobei sich die Schlitze im Gebrauch an einer Position unterhalb der Oberfläche der Suspension (12) befinden.

2. Reaktor nach Anspruch 1, wobei die Gasabscheideeinrichtung einen Abscheidebereich umfasst, der eine größere Querschnittsfläche als der untere Abschnitt (18) des Rohrs aufweist.

3. Reaktor nach Anspruch 2, wobei die Querschnittsfläche des Abscheidebereichs um mindestens das 2-fache größer als die des unteren Abschnittes (18) des Rohrs ist.

4. Reaktor nach einem der vorangehenden Ansprüche, wobei die Fläche des Suspensionseinlasses zum Rücklauf (16) mindestens so groß wie die Querschnittsfläche des oberen Abschnitts (17) des Rohrs ist.

5. Reaktor nach einem der Ansprüche 1 bis 4, wobei der Suspensionseinlass zum Rücklauf (16) mehrere rechteckige Schlitze (22) umfasst.

6. Reaktor nach einem der Ansprüche 1 bis 4, wobei der Suspensionseinlass zum Rücklauf (16) mehrere dreieckige Schlitze umfasst.

7. Reaktor nach einem der vorangehenden Ansprüche, wobei die Schlitze (22) in den Rücklauf (16) in mehreren übereinanderliegenden umlaufenden Reihen angeordnet sind, wobei sich jeder Reihe um den Umfang des Rücklaufs (16) erstreckt.

8. Reaktor nach einem der vorangehenden Ansprüche, wobei die Schlitze (22) eine Breite von weitestens 0,5 bis 20 cm und eine Höhe von 2 bis 50 cm aufweisen.

9. Reaktor nach einem der vorangehenden Ansprüche, wobei die vertikale Länge des Rücklaufs im Gebrauch im Bereich von 30 - 120 % der beabsichtigten Tiefe der Suspension (12) im Reaktor liegt.

10. Reaktor nach einem der vorangehenden Ansprüche, beinhaltend mehrere Rückläufe (16).

11. Verwendung eines Suspensionsblasensäulenreaktors (11) nach einem der vorangehenden Ansprüche zum Ausführen einer Fischer-Tropsch-Synthesereaktion.

12. Verfahren zum Ausführen einer Fischer-Tropsch-Synthesereaktion, umfassend das Zuführen von Wasserstoffgas und Kohlenmonoxidgas zu einer einen Fischer-Tropsch-Katalysator enthaltenden Suspension in einem Reaktor (11) nach einem der Ansprüche 1 bis 10.

## Revendications

1. Réacteur à colonne à bulles en suspension (11) conçu en utilisation pour inclure une phase de suspension (12), et au-dessus de la phase de suspension (12), une phase gazeuse (15), le réacteur (11) incluant un tube de descente (16) fixé à l'intérieur du réacteur, le tube de descente (16) comprenant un tube allongé, le tube comportant une partie inférieure (18) et une partie supérieure (17), la partie inférieure (18) ayant une sortie de suspension dans la région du fond du tube, la partie supérieure (17) ayant une entrée de suspension conçue pour permettre à la suspension d'entrer dans le tube, des moyens de séparation de gaz conçus pour séparer les bulles de gaz de la suspension à l'intérieur de la partie supérieure du tube et une sortie de gaz (21) dans la région du sommet du tube, l'entrée de suspension comprenant une ou plusieurs fentes (22) dans la paroi de la partie supérieure du tube ; dans lequel la partie la plus haute de la partie supérieure (17) du tube s'étend au-dessus de la surface de la phase de suspension (12) en utilisation et est ouverte pour la communication de fluide avec la phase gazeuse (15) au-dessus de la phase de suspension (12), ce qui permet de produire la sortie de gaz (21), et dans lequel les fentes (22) dans la partie supérieure du tube sont allongées dans la direction de l'axe du tube de descente, la hauteur des fentes (22) étant supérieure à leur largeur, et dans lequel les fentes sont en utilisation à une position sous la surface de la suspension (12).

2. Réacteur selon la revendication 1, dans lequel les moyens de séparation de gaz comprennent une zone de séparation qui présente une surface en coupe transversale supérieure à celle de la partie inférieure (18) du tube.

3. Réacteur selon la revendication 2, dans lequel la surface en coupe transversale de la zone de séparation est supérieure à celle de la partie inférieure (18) du tube d'au moins un facteur 2.

4. Réacteur selon l'une quelconque des revendications précédentes, dans lequel la surface de l'entrée de suspension dans le tube de descente (16) est au moins égale à la surface en coupe transversale de la partie supérieure (17) du tube.

5. Réacteur selon l'une quelconque des revendications 1 à 4, dans lequel l'entrée de suspension dans le tube de descente (16) comprend une pluralité de fentes rectangulaires (22).

6. Réacteur selon l'une quelconque des revendications 1 à 4, dans lequel l'entrée de suspension dans le tube de descente (16) comprend une pluralité de fentes triangulaires.

7. Réacteur selon l'une quelconque des revendications précédentes, dans lequel les fentes (22) dans le tube de descente (16) sont disposées en une pluralité de rangées circonférentielles les unes au-dessus des autres, chaque rangée s'étendant autour de la périphérie du tube de descente (16).

8. Réacteur selon l'une quelconque des revendications précédentes, dans lequel les fentes (22) présentent une largeur maximale de 0,5 à 20 cm et une hauteur de 2 à 50 cm.

9. Réacteur selon l'une quelconque des revendications précédentes, dans lequel la longueur verticale du tube de descente se trouve dans la plage comprise entre 30 et 120 % de la profondeur prévue de la suspension (12) dans le réacteur en utilisation.

10. Réacteur selon l'une quelconque des revendications précédentes, comprenant une pluralité de tubes de descente (16).

11. Utilisation d'un réacteur à colonne à bulles en suspension (11) selon l'une quelconque des revendications précédentes, afin d'exécuter une réaction de synthèse Fischer-Tropsch.

12. Procédé d'exécution d'une réaction de synthèse Fischer-Tropsch qui comprend l'alimentation d'une suspension comprenant un catalyseur de Fischer-Tropsch en hydrogène gazeux et en monoxyde de carbone dans un réacteur (11) selon l'une quelconque des revendications 1 à 10.
